# EUROPÄISCHE PATENTSCHRIFT

(11) **EP 3 668 678 B1**
(45) Veröffentlichungstag und Bekanntmachung des Hinweises auf die Patenterteilung: **21.07.2021**
(21) Anmeldenummer: 18749760.7
(22) Anmeldetag: 27.07.2018
(51) Int. Cl.: B23K 26/06, B23K 26/38, C03C 17/00, G02B 5/28, B23K 26/70

(54) **LASERBEARBEITUNGSKÖPFE MIT EINEM OPTISCHEN ELEMENT ZUM HERAUSFILTERN VON UV-PROZESSSTRAHLUNG, UND ZUGEHÖRIGES LASERBEARBEITUNGSVERFAHREN**
LASER MACHINING HEADS COMPRISING AN OPTICAL ELEMENT FOR FILTERING OUT UV PROCESS RADIATION, AND CORRESPONDING LASER MACHINING METHOD
TÊTES DE TRAITEMENT PAR LASER ÉQUIPÉE D'UN ÉLÉMENT OPTIQUE CONÇU POUR EXTRAIRE PAR FILTRAGE UN RAYONNEMENT UV, ET PROCÉDÉ DE TRAITEMENT PAR LASER CORRESPONDANT

(30) Priorität: 16.08.2017 DE 102017214249
(43) Veröffentlichungstag der Anmeldung: 24.06.2020
(73) Patentinhaber: Trumpf Werkzeugmaschinen GmbH + Co. KG, 71254 Ditzingen (DE)
(72) Erfinder: WEICK, Jürgen-Michael, 71679 Asperg (DE); PAUL, Axel, 71254 Ditzingen/Heimerdingen (DE)
(74) Vertreter: Kohler Schmid Möbus Patentanwälte
(86) Internationale Anmeldenummer: PCT/EP2018/070496
(87) Internationale Veröffentlichungsnummer: WO 2019/034397

(56) Entgegenhaltungen:
- JP-B2- 3 090 018
- US-A1- 2009 286 173
- US-A1- 2013 046 054
- US-A1- 2015 062 327

## Beschreibung

Die Erfindung betrifft Laserbearbeitungsköpfe für die Laserbearbeitung von Werkstücken mittels eines Laserstrahls gemäß dem Oberbegriff der Ansprüche 1 und 7 (siehe z.B. US 2009/286173 A1), und ein Verfahren zum Laserbearbeiten, insbesondere Laserschneiden, von Werkstücken mittels eines Laserstrahles unter Verwendung eines solchen Laserbearbeitungskopfes, siehe Anspruch 13.

Derartige Laserbearbeitungsköpfe und Laserbearbeitungsverfahren sind hinlänglich bekannt.

Bei Laserbearbeitungsprozessen, insbesondere Laserschneidprozessen, mit CO₂-Laserstrahlung ist es bekannt, dass es aufgrund des hohen Energieeintrags in der Prozesszone zur Entstehung eines Plasmas kommen kann. Die Neigung der die Prozesszone umgebenden Atmosphäre zur Ausbildung eines Plasmas ist abhängig von der Wellenlänge der einwirkenden Laserstrahlung und ist beim Einsatz von CO₂-Laserstrahlung mit einer Wellenlänge von 10,6 µm etwa 100mal höher als beim Einsatz von Festkörper- oder Diodenlaserstrahlung mit einer Wellenlänge im Bereich von 1 µm oder darunter. Bei der Materialbearbeitung mit CO₂-Lasern sind daher üblicherweise Regelungsprozesse beispielsweise für die Regelung der Laserleistung oder der Schneidgeschwindigkeit vorgesehen, durch die das Auftreten von Plasma detektiert und/oder verhindert wird. Bei der Materialbearbeitung mit Festkörperlasern sind bis zu einer Laserleistung von 6 kW solche Regelungseingriffe in den Prozess nicht nötig, da es nicht zur Plasmabildung kommt. Allerdings hat sich gezeigt, dass es beim Laserschneiden mit einer Laserleistung von größer als 6 kW auch beim Einsatz eines Festkörper- oder Diodenlasers als Strahlquelle, insbesondere bei langen Schnitten, zu Prozessstörungen bis hin zum Schnittabriss kommen kann.

Die vorliegende Erfindung stellt sich daher die Aufgabe, einen Laserbearbeitungskopf der eingangs genannten Art dahingehend weiterzubilden, dass solche Prozessstörungen bei der Lasermaterialbearbeitung mit Laserleistungen von größer als 6 kW vermieden werden können und folglich die Prozessstabilität erhöht werden kann.

Laserbearbeitungsköpfe und ein Verfahren gemäß der Erfindung sind in den Ansprüchen 1, 7 und 13 definiert.

Erfindungsgemäß wurde erkannt, dass bei der Materialbearbeitung, insbesondere beim Laserschneiden, mit Festkörper- oder Diodenlaserstrahlung hoher Leistung (> 6 kW) zwar kein Atmosphären-Plasma gebildet wird, dass jedoch entstehende Metalldämpfe in energetisch intensive Zustände versetzt werden, was zu leistungsstarken Prozessemissionen im Wellenlängenbereich kleiner als 400 nm führt. Die in Laserbearbeitungsköpfen für die Materialbearbeitung mit Festkörperlasern eingesetzten optischen Elemente (Spiegel, Linsen, Schutzgläser) bestehen üblicherweise aus hochreinem Quarz. Für diese optischen Elemente ist Prozessstrahlung mit Wellenlängen unter 400 nm kritisch, da Quarz in diesem Wellenlängenbereich absorbiert. Ebenso können Beschichtungsmaterialien, die z.B. zur Entspiegelung der optischen Elemente verwendet werden (z.B. Ta₂O₅), in einem Wellenlängenbereich unter 400 nm absorbierend sein und einen negativen Aufheizprozess der optischen Elemente initiieren. Insbesondere bei langen Prozessdauern, beispielsweise bei langen Schnitten, kann es durch diese Erwärmung von optischen Elementen zu einem Shift der Fokuslage, also zu einer Veränderung der Fokuslage des Laserstrahls in Strahlausbreitungsrichtung, kommen. Erfindungsgemäß filtert das optische Element Strahlungsanteile mit Wellenlängen kleiner als 400 nm aus der vom Werkstück bzw. von der Prozesszone erzeugten Prozessstrahlung heraus, so dass sich die optischen Elemente nicht bzw. nur geringfügig aufheizen und somit kein Shift der Fokuslage auftritt.

In einer ersten Ausführungsform der Erfindung weist das optische Element eine für die Laserwellenlänge des Laserstrahls transmittierende und für Strahlungsanteile der Prozessstrahlung mit Wellenlängen kleiner als 400 nm hochreflektierende Beschichtung auf. Die störende Prozessstrahlung wird am optischen Element zurück in Richtung Werkstück bzw. Prozesszone reflektiert, so dass sie nicht durch das optische Element hindurchtritt und auf diese Weise von den übrigen optischen Elementen des Laserbearbeitungskopfs ferngehalten wird.

Vorzugsweise weist die Beschichtung eine Transmission von mindestens 99% für Laserwellenlängen zwischen 900 und 1100 nm oder im Bereich von 10,6 µm und eine Reflexion von mindestens 90%, bevorzugt mindestens 95%, für Strahlungsanteile der Prozessstrahlung mit Wellenlängen kleiner als 400 nm auf. Mit anderen Worten ist die Beschichtung nicht-absorbierend und anti-reflektierend für die Laserwellenlänge und gleichzeitig hochreflektierend für Wellenlängen der Prozessstrahlung unter 400 nm.

Die Beschichtung ist bevorzugt durch ein aus mehreren Schichten bestehendes Interferenzschichtsystem gebildet und vorteilhaft so ausgeführt, dass sie für einen Einfallswinkel des Laserstrahls von kleiner 15° auf das optische Element zu destruktiver Interferenz der an den einzelnen Schichten reflektierten Strahlungsanteile führt und für Prozessstrahlung mit Wellenlängen kleiner als 400 nm bei einem Einfallswinkel der Prozessstrahlung von kleiner als 15° auf das optische Element zu konstruktiver Interferenz der reflektierten Strahlungsanteile führt. Auf diese Weise wird eine gute Entspiegelung des optischen Elements für die typischen Einfallswinkel des Laserstrahls auf dem optischen Element erreicht. Das Interferenzschichtsystem kann mehrere Schichten aus dielektrischem Material umfassen, die sich in ihrem Brechungsindex und ihrer Schichtdicke unterscheiden. Das dielektrische Material kann ein Metalloxid aufweisen oder aus einem Metalloxid bestehen und muss UV- und temperaturstabil sein. Für UV-reflektierende Beschichtungen sind beispielsweise Schichtsysteme aus Titanoxid (TiO₂) und Siliziumdioxid (SiO₂) geeignet. Hochreflektierende Interferenzschichtsysteme für UV-Strahlung sind beispielsweise aus der WO 01/46718 A2 bekannt.

Besonders bevorzugt ist die Beschichtung auf dem im Strahlengang des Laserstrahls letzten oder vorletzten optischen Element vorgesehen, und zwar insbesondere auf dessen dem Werkstück zugewandten Seite. Im Allgemeinen ist es ausreichend, das optische Element nur auf einer Seite mit der Beschichtung zu versehen. Bei dem optischen Element kann es sich beispielsweise um ein werkstückseitiges Schutzglas handeln, dessen dem Werkstück zugewandte Seite die Beschichtung aufweist, so dass die störende Prozessstrahlung erst gar nicht in den Laserbearbeitungskopf eintritt. Wenn dies - beispielsweise aus Kostengründen für ein häufig zu tauschendes Ersatzteil - nicht sinnvoll ist, kann auch eines der übrigen optischen Elemente im Laserbearbeitungskopf mit der Beschichtung versehen sein. So kann beispielsweise ein weiteres Schutzglas im Strahlengang vor dem werkstückseitigen Schutzglas angeordnet sein, das nicht verschmutzt und daher nicht oder nicht so häufig getauscht werden muss.

In einer weiten Ausführungsform der Erfindung weist das optische Element eine für die Laserwellenlänge des Laserstrahls reflektierende und für Wellenlängen der Prozessstrahlung kleiner als 400 nm hochabsorbierende Beschichtung auf. Die störenden Strahlungsanteile der Prozessstrahlung werden dann am optischen Element, z.B. an einem für den Laserstrahl vorgesehenen Umlenkspiegel, absorbiert und breiten sich nicht weiter im Laserbearbeitungskopf aus. Diese zweite Ausführungsform setzt eine gute Wärmeabfuhr aus dem absorbierenden optischen Element voraus, so dass das optische Element bevorzugt in thermischem Kontakt mit einer Wärmesenke steht.

Vorzugsweise weist die Beschichtung eine Reflexion von mindestens 97% für Laserwellenlängen zwischen 900 und 1100 nm oder im Bereich von 10,6 µm und eine Absorption von mindestens 90% für Wellenlängen der Prozessstrahlung von kleiner als 400 nm auf. Mit anderen Worten ist die Beschichtung nicht-absorbierend und anti-reflektierend für die Laserwellenlänge und gleichzeitig hochabsorbierend für Wellenlängen der Prozessstrahlung unter 400 nm.

Die Beschichtung ist bevorzugt durch ein aus mehreren Schichten bestehendes Schichtsystem zur Absorption von UV-Strahlung ausgeführt und kann beispielsweise Tantalpentoxid (Ta₂O5) oder Hafniumoxid (HfO₂) als Schichtmaterial aufweisen. Solche hochabsorbierenden Beschichtungen für UV-Strahlung sind beispielsweise aus der DE 101 27 225 A1 bekannt.

Bei bevorzugten Ausführungsformen des erfindungsgemäßen Laserbearbeitungskopfes weist die Beschichtung für sichtbare Prozessstrahlung eine Transmission von größer als 50% auf, um durch das optische Element (Schutzglas, Linse, wellenlängenselektiver Spiegel) hindurch eine Prozessbeobachtung oder die Beobachtung eines sichtbaren Pilotlaserstrahls zu ermöglichen.

In einer bevorzugten Ausführungsform weist das optische Element eine Codierung, insbesondere eine mechanische oder optische Codierung, für den lagerichtigen Einbau des optischen Elements im Laserbearbeitungskopf auf. Durch die Codierung ist sicherstellt, dass das optische Element nur so in den Laserbearbeitungskopf eingesetzt werden kann, dass seine beschichtete Seite zum Werkstück zeigt. Bei der Codierung kann es sich um eine besondere Außenkontur des optischen Elements oder auch um eine Beschriftung, z.B. an der Seitenkante des optischen Elements, handeln.

Die Erfindung betrifft schließlich auch ein Verfahren zum Laserbearbeiten, insbesondere Laserschneiden, von Werkstücken mittels eines Laserstrahls mit einer Leistung von größer als 6 kW und bevorzugt mit einer Laserwellenlänge zwischen 900 und 1100 nm oder im Bereich von 10,6 µm, wobei der Laserstrahl von einem wie oben ausgebildeten Laserbearbeitungskopf auf ein Werkstück gerichtet wird, siehe Anspruch 13.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: eine erste Ausführungsform des erfindungsgemäßen Laserbearbeitungskopfes mit einem Schutzglas zum Reflektieren von UV-Prozessstrahlung;
- Fig. 2: den in Fig. 1 gezeigten Laserbearbeitungskopf mit einer zusätzlichen Prozesslichtbeobachtung;
- Fig. 3: eine zweite Ausführungsform des erfindungsgemäßen Laserbearbeitungskopfes mit einem inneren Schutzglas zum Reflektieren von UV-Prozessstrahlung;
- Fig. 4: eine dritte Ausführungsform des erfindungsgemäßen Laserbearbeitungskopfes mit einem Spiegel zum Absorbieren von UV-Prozessstrahlung; und
- Fig. 5: den in Fig. 4 gezeigten Laserbearbeitungskopf mit einer zusätzlichen Prozesslichtbeobachtung.

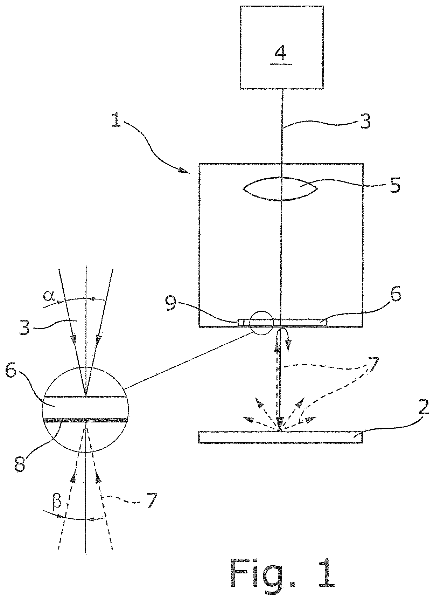

Der in **Fig. 1** gezeigte Laserbearbeitungskopf **1** dient zur Bearbeitung von Werkstücken **2** mittels eines Laserstrahls **3** mit einer Laserleistung von größer als 6 kW und mit einer Laserwellenlänge im Bereich von ca. 1 µm oder ca. 10 µm. Der Laserstrahl 3 wird von einem Laserstrahlerzeuger **4**, z.B. von einem CO₂-Laser (Laserwellenlänge 10,6 µm) oder von einem Dioden- oder Festkörperlaser (Laserwellenlängen zwischen 900 und 1100 nm), erzeugt und mittels (nicht gezeigter) Umlenkspiegel oder eines (nicht gezeigten) Lichtleitkabels vom Laserstrahlerzeuger 4 zum Laserbearbeitungskopf 1 geführt.

Im Strahlengang des Laserstrahls 3 sind im Laserbearbeitungskopf 1 zwei optische Elemente **5**, **6** angeordnet, nämlich eine Fokussierlinse 5 zum Fokussieren des Laserstrahls 3 in Richtung auf das Werkstück 2 und ein Schutzglas 6, durch das der fokussierte Laserstrahls 3 aus dem Laserbearbeitungskopf 1 austritt. Das Schutzglas 6 ist also das in Strahlausbreitungsrichtung des Laserstrahls 3 letzte optische Element des Laserbearbeitungskopfes 1.

Bei der Laserbearbeitung mit Laserleistungen größer als 6 kW wird am Werkstück 2 bzw. in der Prozesszone aufgrund eines Atmosphären-Plasmas oder energetisch intensiver Metalldämpfe Prozessstrahlung **7** erzeugt, die auch Strahlungsanteile mit Wellenlängen kleiner als 400 nm aufweist. Die im Laserbearbeitungskopf 1 zur Strahlführung des Laserstrahls 3 eingesetzten optischen Elemente, wie die hier gezeigte Fokussierlinse 5 und das Schutzglas 6, bestehen bei der Laserbearbeitung mit Dioden- oder Festkörperlasern üblicherweise aus hochreinem Quarz. Für diese optischen Elemente sind Wellenlängen unter 400 nm kritisch, da Quarz in diesem Wellenlängenbereich absorbiert und die optischen Elemente daher erwärmt werden. Ebenso können Beschichtungsmaterialien, die z.B. zur Entspiegelung der optischen Elemente verwendet werden (z.B. Ta₂O₅), in einem Wellenlängenbereich unter 400nm absorbierend sein und ebenfalls zur Erwärmung der optischen Elemente führen. Insbesondere bei langen Prozessdauern, beispielsweise bei langen Schnitten, kann es durch diese Erwärmung von optischen Elementen zu einem unerwünschten Shift der Fokuslage, also zu einer Veränderung der Fokuslage des Laserstrahls 3 in Strahlausbreitungsrichtung, kommen.

Um zu verhindern, dass die optischen Elemente 5, 6 des Laserbearbeitungskopfes 1 durch die Prozessstrahlung 7 aufgeheizt werden und ein Shift der Fokuslage auftritt, weist das Schutzglas 6 auf seiner dem Werkstück 2 zugewandten Außenseite eine Beschichtung **8** auf, die für die Laserwellenlänge des Laserstrahls 3 transmittierend und für Wellenlängen der Prozessstrahlung 7 kleiner als 400 nm hochreflektierend ist. Die störenden Strahlungsanteile der Prozessstrahlung 7 mit UV-Wellenlängen werden außen am Schutzglas 6 reflektiert und gelangen nicht in den Laserbearbeitungskopf 1. Die Beschichtung 8 ist nicht-absorbierend und anti-reflektierend für die Laserwellenlänge und gleichzeitig hochreflektierend für Strahlung mit Wellenlängen unter 400 nm.

Die Beschichtung 8 ist beispielsweise durch ein aus mehreren Schichten bestehendes Interferenzschichtsystem gebildet und so ausgeführt, dass die Beschichtung 8 für typische Einfallswinkel **α** des Laserstrahls 3 von kleiner 15° zu destruktiver Interferenz der an den einzelnen Schichten reflektierten Strahlungsanteile führt und für Strahlungsanteile der Prozessstrahlung 7 mit einer Wellenlänge kleiner als 400 nm bei einem Einfallswinkel **β** von kleiner als 15° zu konstruktiver Interferenz der reflektierten Strahlungsanteile führt. Die Beschichtung 8 kann mehrere Schichten aus dielektrischem Material umfassen, die sich in ihrem Brechungsindex und ihrer Schichtdicke unterscheiden. Das dielektrische Material kann ein Metalloxid aufweisen oder aus einem Metalloxid bestehen und muss UV- und temperaturstabil sein. Für UV-reflektierende Beschichtungen sind beispielsweise Schichtsysteme aus Titanoxid (TiO₂) und Siliziumdioxid (SiO₂) geeignet.

Um sicherzustellen, dass das Schutzglas 6 nur so in den Laserbearbeitungskopf 1 eingebaut werden kann, dass seine beschichtete Seite zum Werkstück 2 zeigt, weist das Schutzglas 6 eine mechanische Codierung **9**, wie z.B. eine asymmetrische Außenkontur, auf. Alternativ kann das Schutzglas 6 auch eine optische Codierung zur Kennzeichnung seiner beschichteten Seite tragen.

Anstelle des Schutzglases 6 kann auch eine Linse das letzte optische Element im Laserbearbeitungskopf 1 sein, das auf seiner dem Werkstück 2 zugewandten Seite die UV-reflektierende Beschichtung 8 aufweist. Handelt es sich hierbei um eine Plankonvex-Linse, so ist einfach sicherzustellen, dass die richtige Seite der Linse zum Werkstück 2 zeigt. Bei einer Meniskuslinse muss dagegen der lagerichtige Einbau in den Laserbearbeitungskopf 1 durch eine Codierung (z.B. einen Flächenanschliff) sichergestellt werden.

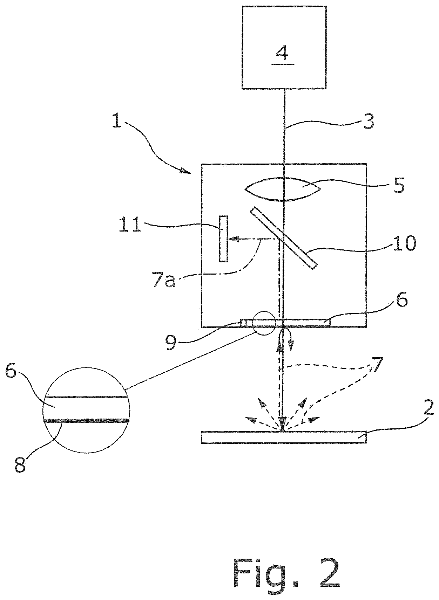

Wie in **Fig. 2** gezeigt, kann die Beschichtung 8 für sichtbares Licht eine Transmission von größer als 50% aufweisen, um sichtbare Prozessstrahlung **7a** durch das Schutzglas 6 hindurch beobachten zu können. Dazu ist beispielsweise im Laserbearbeitungskopf 1 ein für die Laserwellenlänge durchlässiger und für sichtbare Wellenlängen reflektiver Spiegel **10** angeordnet, der das Laserlicht 3 durchlässt und die sichtbare Prozessstrahlung 7a auf einen Detektor (z.B. eine Kamera) **11** lenkt.

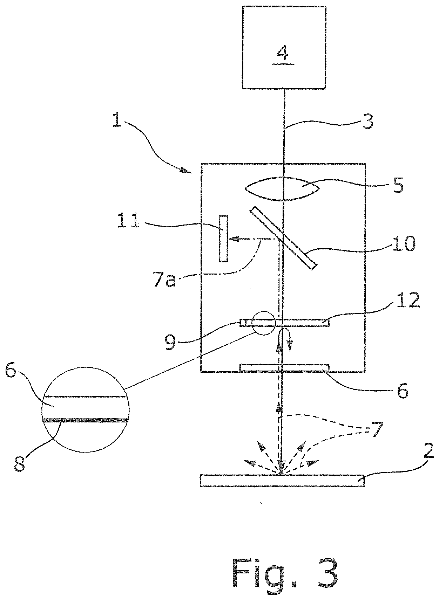

Wenn eine Beschichtung an dem häufig zu tauschenden, werkstückseitigen Schutzglas 6 aus Kostengründen nicht sinnvoll ist, kann auch eines der übrigen optischen Elemente im Laserbearbeitungskopf 1 mit der Beschichtung versehen sein. So kann beispielsweise, wie in **Fig. 3** gezeigt, im Strahlengang vor dem werkstückseitigen (äußeren) Schutzglas 6 ein weiteres (inneres) Schutzglas **12** angeordnet sein, das die Beschichtung 8 aufweist und, weil vor Verschmutzungen geschützt, nicht oder nicht so häufig getauscht werden muss.

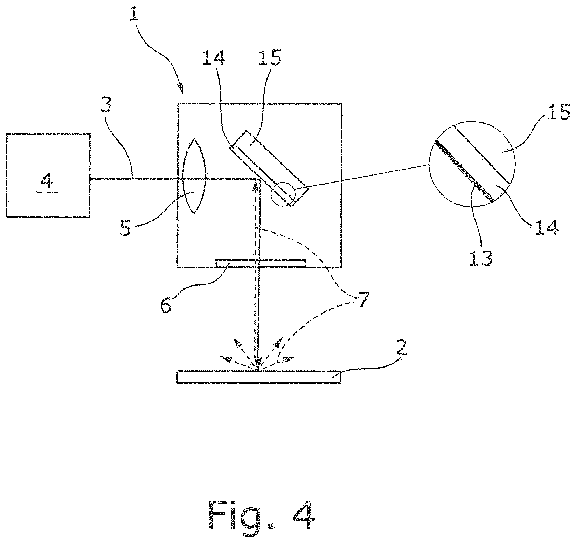

In **Fig. 4** werden die störenden UV-Wellenlängen der Prozessstrahlung 7 nicht wie in den Fign 1. bis 3 außen am Schutzglas 6 reflektiert, sondern von einer Beschichtung **13** eines im Strahlengang des Laserstrahls 3 angeordneten optischen Elements, hier eines Umlenkspiegels **14**, absorbiert und dadurch von den übrigen optischen Elementen, wie der Fokussierlinse 5, ferngehalten. Die Beschichtung 13 ist für die Laserwellenlänge des Laserstrahls 3 hochreflektierend und für Wellenlängen der Prozessstrahlung 7 kleiner als 400 nm hochabsorbierend.

Die Beschichtung 13 ist beispielsweise durch ein aus mehreren Schichten bestehendes Schichtsystem gebildet, das zur Absorption von UV-Strahlung beispielsweise Tantalpentoxid (Ta₂O5) oder Hafniumoxid (HfO₂) als Schichtmaterial aufweisen kann. Um eine Erwärmung des Umlenkspiegels 14 aufgrund der Strahlungsabsorption zu vermeiden, muss eine gute Kühlung des Umlenkspiegels 14 gewährleistet sein. Daher ist der Umlenkspiegel 14 an einer Wärmesenke **15** montiert.

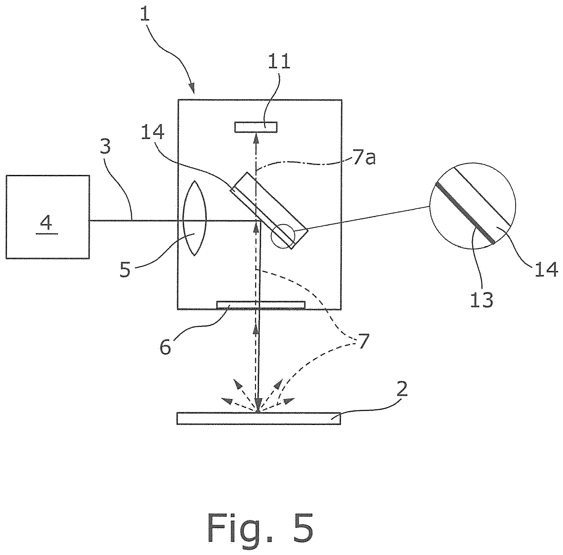

Wie in **Fig. 5** gezeigt, kann die Beschichtung 13 für sichtbares Licht eine Transmission von größer als 50% aufweisen, um die sichtbare Prozessstrahlung 7a durch den Umlenkspiegel 14 hindurch mittels des Detektors (z.B. Kamera) 11 beobachten zu können.

## Patentansprüche

1. Laserbearbeitungskopf (1) für die Laserbearbeitung von Werkstücken (2) mittels eines Laserstrahls (3), mit mindestens einem im Strahlengang des Laserstrahls (3) angeordneten optischen Element (6),
**dadurch gekennzeichnet,**
**dass** das mindestens eine optische Element als ein Schutzglas (6) ausgeführt ist, das im Strahlengang des Laserstrahls (3) als letztes oder vorletztes optisches Element vorgesehen ist, das eine für die Laserwellenlänge des Laserstrahls (3) transmittierende und für Strahlungsanteile der Prozessstrahlung (7) mit Wellenlängen kleiner als 400 nm hochreflektierende Beschichtung (8) aufweist und das ausgebildet ist, aus einer vom Werkstück (2) kommenden Prozessstrahlung (7) Strahlungsanteile mit Wellenlängen kleiner als 400 nm herauszufiltern.

2. Laserbearbeitungskopf nach Anspruch 1, **dadurch gekennzeichnet, dass** die Beschichtung (8) eine Transmission von mindestens 99 % für Laserwellenlängen zwischen 900 und 1100 nm oder im Bereich von 10,6 µm aufweist.

3. Laserbearbeitungskopf nach Anspruch 1 oder 2, **dadurch gekennzeichnet, dass** die Beschichtung (8) eine Reflexion von mindestens 90%, bevorzugt mindestens 95%, für Strahlungsanteile der Prozessstrahlung (7) mit Wellenlängen kleiner als 400 nm aufweist.

4. Laserbearbeitungskopf nach einem der Ansprüche 1 bis 3, **dadurch gekennzeichnet, dass** das Schutzglas (6) aus Quarzglas oder Zinkselenid gebildet ist.

5. Laserbearbeitungskopf nach einem der Ansprüche 1 bis 4, **dadurch gekennzeichnet, dass** die Beschichtung (8) durch ein aus mehreren Schichten bestehendes Interferenzschichtsystem gebildet und insbesondere so ausgeführt ist, dass die Beschichtung (8) für einen Einfallswinkel (α) des Laserstrahls (3) von kleiner 15° auf das Schutzglas (6) zu destruktiver Interferenz der an den einzelnen Schichten reflektierten Strahlungsanteile führt und für Strahlungsanteile der Prozessstrahlung (7) mit Wellenlängen kleiner als 400 nm bei einem Einfallswinkel (β) der Prozessstrahlung (7) von kleiner als 15° auf das Schutzglas (6) zu konstruktiver Interferenz der reflektierten Strahlungsanteile führt.

6. Laserbearbeitungskopf nach einem der Ansprüche 1 bis 5, **dadurch gekennzeichnet, dass** die Beschichtung (8) auf der dem Werkstück (2) zugewandten Seite des Schutzglases (6) vorgesehen ist.

7. Laserbearbeitungskopf (1) für die Laserbearbeitung von Werkstücken (2) mittels eines Laserstrahls (3), mit mindestens einem im Strahlengang des Laserstrahls (3) angeordneten optischen Element (14),
**dadurch gekennzeichnet,**
**dass** das mindestens eine optische Element als Spiegel (14) ausgeführt ist, der eine für die Laserwellenlänge des Laserstrahls (3) reflektierende und für Strahlungsanteile der Prozessstrahlung (7) mit Wellenlängen kleiner als 400 nm hochabsorbierende Beschichtung (13) aufweist und der ausgebildet ist, aus einer vom Werkstück (2) kommenden Prozessstrahlung (7) Strahlungsanteile mit Wellenlängen kleiner als 400 nm herauszufiltern.

8. Laserbearbeitungskopf nach Anspruch 7, **dadurch gekennzeichnet, dass** die Beschichtung (13) eine Reflexion von mindestens 97 % für Laserwellenlängen zwischen 900 und 1100 nm oder im Bereich von 10,6 µm aufweist.

9. Laserbearbeitungskopf nach Anspruch 7 oder 8, **dadurch gekennzeichnet, dass** die Beschichtung (13) eine Absorption von mindestens 90% für Strahlungsanteile der Prozessstrahlung (7) mit Wellenlängen kleiner als 400 nm aufweist.

10. Laserbearbeitungskopf nach einem der Ansprüche 7 bis 9, **dadurch gekennzeichnet, dass** der Spiegel (14) in thermischem Kontakt mit einer Wärmesenke (15) steht.

11. Laserbearbeitungskopf nach einem der vorhergehenden Ansprüche, **dadurch gekennzeichnet, dass** die Beschichtung (8; 13) für sichtbare Prozessstrahlung (7a) eine Transmission von größer als 50% aufweist.

12. Laserbearbeitungskopf nach einem der Ansprüche 1 bis 6, **dadurch gekennzeichnet, dass** das Schutzglas (6) eine Codierung (9) für den lagerichtigen Einbau des Schutzglases (6) im Laserbearbeitungskopf (1) aufweist.

13. Verfahren zum Laserbearbeiten, insbesondere Laserschneiden, von Werkstücken (2) mittels eines Laserstrahls (3) mit einer Leistung von größer als 6 kW und bevorzugt mit einer Laserwellenlänge zwischen 900 und 1100 nm oder im Bereich von 10,6 µm, wobei der Laserstrahl (3) von einem Laserbearbeitungskopf (1) nach einem der Ansprüche 1 bis 12 auf ein Werkstück (2) gerichtet wird, wobei bei der Laserbearbeitung am Werkstück (2) Prozessstrahlung (7) erzeugt wird und wobei aus der vom Werkstück (2) kommenden Prozessstrahlung (7) Strahlungsanteile mit Wellenlängen kleiner als 400 nm vom Schutzglas (6) oder Spiegel (14) herausgefiltert werden.

## Claims

1. Laser machining head (1) for laser machining of workpieces (2) by means of a laser beam (3), comprising at least one optical element (6) that is arranged in the beam path of the laser beam (3),
**characterized in that**
the at least one optical element is designed as protective glass (6) that is provided as last or penultimate optical element in the beam path of the laser beam (3) and has a coating (8) which is transmissive for the laser wavelength of the laser beam (3) and is highly reflective for radiation components of the process radiation (7) with wavelengths of less than 400nm and is designed to filter out radiation components with wavelengths of less than 400nm from a process radiation (7) coming from the workpiece (2).

2. Laser machining head according to claim 1, **characterized in that** the coating (8) has a transmission of at least 99% for laser wavelengths of between 900 and 1100nm or in the region of 10.6µm.

3. Laser machining head according to claim 1 or 2, **characterized in that** the coating (8) has a reflection of at least 90%, preferably at least 95%, for radiation components of the process radiation (7) with wavelengths of less than 400nm.

4. Laser machining head according to one of the claims 1 to 3, **characterized in that** the protective glass (6) is formed of quartz glass or zinc selenide.

5. Laser machining head according to one of the claims 1 to 4, **characterized in that** the coating (8) is formed by an interference layer system consisting of a plurality of layers and is designed in particular such that the coating (8) leads to destructive interference of the radiation components reflected on the individual layers for an angle of incidence (α) of the laser beam (3) of less than 15° on the protective glass (6) and leads to constructive interference of the reflected radiation components for radiation components of the process radiation (7) with wavelengths of less than 400nm for an angle of incidence (β) of the process radiation (7) of less than 15° on the protective glass (6).

6. Laser machining head according to one of the claims 1 to 5, **characterized in that** the coating (8) is provided on the side of the protective glass (6) facing the workpiece (2).

7. Laser machining head (1) for laser machining of workpieces (2) by means of a laser beam (3), comprising at least one optical element (14) arranged in the beam path of the laser beam (3),
**characterized in that**
the at least one optical element is designed as a mirror (14) having a coating (13) that is reflective for the laser wavelength of the laser beam (3) and is highly absorptive for radiation components of the process radiation (7) with wavelengths of less than 400nm, and is designed to filter out radiation components with wavelengths of less than 400 nm from the process radiation (7) coming from the workpiece (2).

8. Laser machining head according to claim 7, **characterized in that** the coating (13) has a reflection of at least 97% for laser wavelengths of between 900 and 1100 nm or in the region of 10.6µm.

9. Laser machining head according to claim 7 or 8, **characterized in that** the coating (13) has an absorption of at least 90% for radiation components of the process radiation (7) with wavelengths of less than 400nm.

10. Laser machining head according to one of the claims 7 to 9, **characterized in that** the mirror (14) is in thermal contact with a heat sink (15).

11. Laser machining head according to one of the preceding claims, **characterized in that** the coating (8; 13) has a transmission of more than 50% for visible process radiation (7a).

12. Laser machining head according to one of the claims 1 to 6, **characterized in that** the protective glass (6) has a coding (9) for the correct installation of the protective glass (6) in the laser processing head (1).

13. Method of laser machining, in particular laser cutting, of workpieces (2) by means of a laser beam (3) with a power of more than 6kW and preferably with a laser wavelength of between 900 and 1100nm or in the region of 10.6µm, wherein the laser beam (3) is directed from a laser machining head (1) according to one of the claims 1 to 12 onto a workpiece (2), wherein during laser machining a process radiation (7) is generated on the workpiece (2) and wherein by means of the protective glass (6) or the mirror (14) radiation components with wavelengths of less than 400nm are filtered out of the process radiation (7) coming from the workpiece (2).

## Revendications

1. Tête de traitement par laser (1) pour le traitement par laser de pièces (2) au moyen d'un rayon laser (3), comportant au moins un élément optique (6) disposé dans le parcours de rayon du rayon laser (3),
**caractérisée en ce**
**qu'**au moins un élément est réalisé sous forme d'un verre protecteur (6) qui est prévu dans le parcours de rayon du rayon laser (3) comme dernier ou avant-dernier élément optique qui présente un revêtement (8) transmetteur pour la longueur d'onde laser du rayon laser (3) et très réfléchissant pour des parts de rayonnement du rayonnement de traitement (7) ayant des longueurs d'onde inférieures à 400 nm et qui est conçu pour filtrer, dans un rayonnement de traitement (7) provenant de la pièce (2), des parts de rayonnement ayant des longueurs d'onde inférieures à 400 nm.

2. Tête de traitement par laser selon la revendication 1, **caractérisée en ce que** le revêtement (8) présente une transmission d'au moins 99 % pour des longueurs d'onde de laser de 900 à 1100 nm ou dans la plage de 10,6 µm.

3. Tête de traitement par laser selon la revendication 1 ou 2, **caractérisée en ce que** le revêtement (8) présente une réflexion d'au moins 90 %, de préférence d'au moins 95 %, pour des parts de rayonnement du rayonnement de traitement (7) ayant des longueurs d'onde inférieures à 400 nm.

4. Tête de traitement par laser selon une des revendications 1 à 3, **caractérisée en ce que** le verre protecteur (6) est composé de verre de quartz ou de séléniure de zinc.

5. Tête de traitement par laser selon une des revendications 1 à 4, **caractérisée en ce que** le revêtement (8) est constitué d'un système de couches à interférence composé de plusieurs couches et réalisé en particulier de manière à ce que le revêtement (8), pour un angle d'incidence (α) du rayon laser (3) inférieur à 15° sur le verre protecteur (6), entraîne une interférence destructive des parts de rayonnement réfléchies par les différentes couches et entraîne, pour des parts de rayonnement du rayonnement de traitement (7) ayant des longueurs d'onde inférieures à 400 nm avec un angle d'incidence (β) du rayonnement de traitement (7) inférieur à 15° sur le verre protecteur (6), une interférence constructive des parts de rayonnement réfléchies.

6. Tête de traitement par laser selon une des revendications 1 à 5, **caractérisée en ce que** le revêtement (8) est prévu sur la face tournée vers la pièce (2) du verre protecteur (6).

7. Tête de traitement par laser (1) pour le traitement par laser de pièces (2) au moyen d'un rayon laser (3), comportant au moins un élément optique (14) disposé dans le parcours de laser du rayon laser (3), **caractérisée en ce**
**qu'**au moins un élément optique se présente sous forme d'un miroir (14) qui présente un revêtement (13) réfléchissant pour la longueur d'onde de laser du rayon laser (3) et très absorbant pour des parts de rayonnement du rayonnement de traitement (7) ayant des longueurs d'onde inférieures à 400 nm et qui est conçu pour filtrer, à partir d'un rayonnement de traitement (7) provenant de la pièce (2), des parts de rayonnement ayant des longueurs d'onde inférieures à 400 nm.

8. Tête de traitement par laser selon la revendication 7, **caractérisée en ce que** le revêtement (13) présente une réflexion d'au moins 97 % pour des longueurs d'onde de laser de 900 à 1100 nm ou dans la plage de 10,6 µm.

9. Tête de traitement par laser selon la revendication 7 ou 8, **caractérisée en ce que** le revêtement (13) présente une absorption d'au moins 90 % pour les parts de rayonnement du rayonnement de traitement (7) ayant des longueurs d'onde inférieures à 400 nm.

10. Tête de traitement par laser selon une des revendications 7 à 9, **caractérisée en ce que** le miroir (14) est en contact thermique avec un dissipateur thermique (15).

11. Tête de traitement par laser selon une des revendications précédentes, **caractérisée en ce que** le revêtement (8 ; 13) présente une transmission supérieure à 50 % pour un rayonnement de traitement visible (7a).

12. Tête de traitement par laser selon une des revendications 1 à 6, **caractérisée en ce que** le verre protecteur (6) présente un codage (9) pour le montage à la bonne position du verre protecteur (6) dans la tête de traitement par laser (1).

13. Procédé de traitement par laser, en particulier de coupe par laser, de pièces (2) au moyen d'un rayon laser (3) ayant une puissance supérieure à 6 kW et de préférence une longueur d'onde de laser de 900 à 1100 nm ou dans la plage de 10,6 µm, le rayon laser (3) étant dirigé par une tête de traitement par laser (1) selon une des revendications 1 à 12 sur une pièce (2), dans lequel, lors du traitement par laser, un rayonnement de traitement (7) est généré au niveau de la pièce (2) et, à partir du rayonnement de traitement (7) provenant de la pièce (2), des parts de rayonnement ayant des longueurs d'onde inférieures à 400 nm sont filtrées par le verre protecteur (6) ou le miroir (14).
